# EUROPEAN PATENT SPECIFICATION

(11) **EP 1 186 336 B1**
(45) Date of publication and mention of the grant of the patent: **24.05.2006**
(21) Application number: 01116671.7
(22) Date of filing: 16.07.2001
(51) Int. Cl.: B01D 53/92, F01N 3/04

(54) **Device for removing pollutants contained in exhaust gases of internal-combustion engines**
Vorrichtung zum Entfernen von Schadstoffen aus Abgasen einer Brennkraftmaschine
Dispositif pour élimination de polluants contenus dans de gaz d'échappement de moteurs à combustion interne

(30) Priority: 01.08.2000 IT MO000169
(43) Date of publication of application: 13.03.2002
(73) Proprietor: Simoni, Moris, 41018 S. Cesario sul Panaro (IT); Simoni, Mirco, 41018 S. Cesario sul Panaro (IT)
(72) Inventor: Simoni, Moris, 41018 S. Cesario sul Panaro (IT); Simoni, Mirco, 41018 S. Cesario sul Panaro (IT)
(74) Representative: Modiano, Micaela Nadia

(56) References cited:
- WO-A-98/41311
- DE-A- 3 806 934
- FR-A- 1 506 696
- FR-A- 2 215 839
- FR-A- 2 659 249
- FR-A- 2 776 533
- US-A- 3 647 358

## Description

The present invention relates to a device for removing pollutants contained in exhaust gases of internal-combustion engines.

As it is known, the pollutants contained in the exhaust gases of internal-combustion engines are substantially constituted by carbon monoxide (CO), unburned hydrocarbons (HC), and nitrogen oxides (NO and NO₂).

These pollutants are the result of an incomplete combustion of the mixture of air and fuel (CO and HC) or are inevitable products of the reactions that occur in the combustion environment (NO and NO₂).

Their concentrations depend on many functional parameters of the engines, including in particular the dosage of the mixture of air and fuel and the spark advance; the values of these parameters influence in different and often contrasting ways the noxious emissions, the performance and efficiency of the engines.

Many methods and devices are known which are used to remove noxious emissions and reduce their concentrations; they include the adoption of particular shapes of the combustion chambers and of the intake ducts which allow to reach values which are a compromise between the parameters that ensure reduction of noxious emissions and those which ensure high performance.

Another method that is commonly used to at least partially reduce noxious emissions is the recirculation of part of the exhaust gases to the intake of the engine.

Systems for removing noxious emissions are also known which treat the exhaust gases allowing reactions for complete oxidation of carbon monoxide (CO) and hydrocarbons (HC) to carbon dioxide (CO₂) and water (H₂O) and for reduction of nitrogen oxides (NO and NO₂) to nitrogen (N₂); such systems include injection of secondary oxidizing air into the gas exhaust manifold or catalysis of said reactions.

Catalysis is performed by means of devices known as catalytic converters, including in particular dual-catalyst converters, i.e. converters which allow both oxidation of CO and HC and reduction of NO and NO₂.

A generic catalytic converter is a muffler which is inserted in the exhaust manifold and contains a bed on the surface whereof a porous refractory material is deposited; in turn, such material is impregnated with substances which catalyze the reactions, e.g. platinum, palladium and rhodium.

Contact between the exhaust gases and the catalytic substances triggers the reactions for oxidation and reduction of the noxious emissions.

Other removal devices, such as air filters, materials which selectively adsorb pollutants, additions of substances which facilitate the reduction of noxious emissions to fuels, or the like are commonly used together with catalytic converters.

FR 1.506.696, issued to M. Michel, Jean, Charles Puisais, discloses an air cleaner comprising a main tubular body which defines a liquid reservoir and which is provided with an upper air inlet and a lower drain-plug. Inside the main body there are two coaxial tubular bodies which are one partially inside the other so as to define an annular duct. The internal tubular body is at a lower level and extends in the liquid; the external tubular body extends upwards and defines an expansion chamber which is provided, at the uppermost end, with a cup on which a cleaned air outlet is defined. Upstream the air outlet there is a filter. The air to be cleaned collides against the liquid in which it leaves some of its impurities and then enters in the annular duct defined between the two tubular bodies; a depression is thus generated inside the external tubular body where the liquid nebulizes. The liquid drops collide each other merging together and entrapping the air impurities and then fall down in the liquid reservoir. The cleaned air flows through the filter which retains the remaining liquid drops, then the dried cleaned air flows out from the correspondent outlet.

These conventional methods and devices, however, are not devoid of drawbacks, including the fact that they do not allow to remove simultaneously and completely all the different types of noxious emission, that their operating efficiency depends on the gas treatment time, on the operating temperature and on particular values of the dosage of the mixture of air and fuel.

For this last reason, they are active only after a significant period of time has elapsed from engine startup and they require the installation of particular control and adjustment systems, which increase the complexity of the structure of such engines.

Moreover, catalytic converters require the adoption of particular fuels having a controlled content of lead, which poisons them and undermines their operating effectiveness.

The aim of the present invention is to eliminate the above-noted drawbacks of the prior art, by providing a device for removing pollutants contained in exhaust gases of internal-combustion engines which allows to eliminate effectively and simultaneously all noxious emissions, is active with any kind of fuel, does not require the installation of particular devices for controlling and adjusting the operating parameters of the engine, and ensures reduction of noxious emissions regardless of the time for which they are treated and of the operating temperature.

Within the scope of this aim, an object of the present invention is to provide a device having a structure which is simple, relatively easy to provide in practice, safe in use, effective in operation, and relatively low in cost.

This aim and this and other objects which will become better apparent hereinafter are achieved by the present device for removing pollutants contained in exhaust gases of internal-combustion engines, as claimed in claim 1.

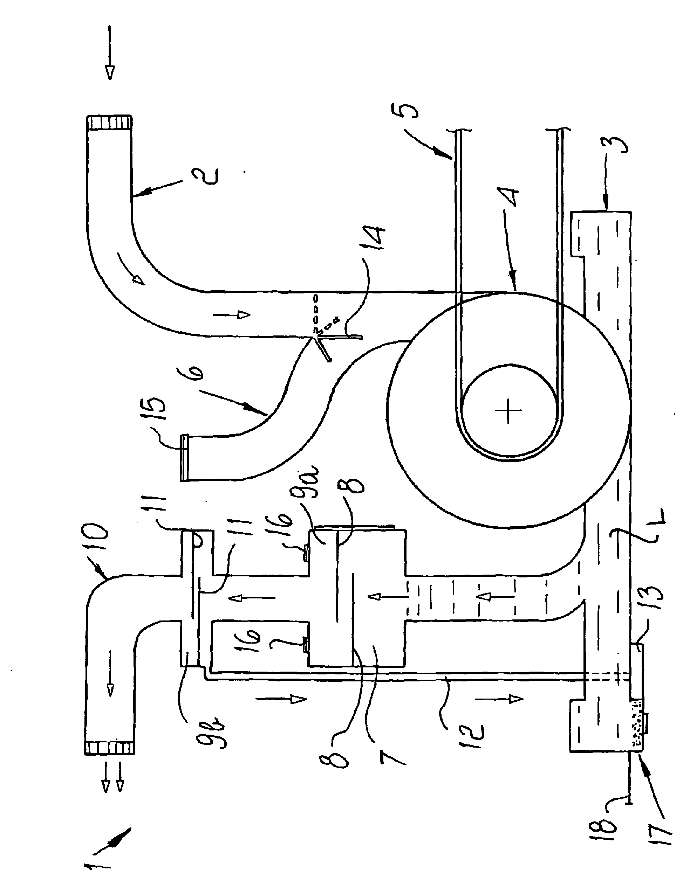

Further characteristics and advantages of the present invention will become better apparent from the detailed description of a preferred but not exclusive embodiment of a device for removing pollutants contained in exhaust gases of internal-combustion engines, illustrated only by way of non-limitative example in the accompanying drawing, wherein the only figure illustrates a schematic view of a device according to the invention.

With reference to the figure, the reference numeral 1 generally designates a device for removing pollutants contained in exhaust gases of internal-combustion engines according to the invention.

The device 1 comprises at least one conveyance duct 2 for the exhaust gases to be treated, which leads into a tank 3 containing a gas scrubbing liquid L which is advantageously constituted by water.

Conveyance means are interposed between the conveyance duct 2 and the tank 3 and are constituted by a fan 4 which is partially immersed in the liquid L and is turned by transmission means of the belt type 5.

The fan 4 forces the exhaust gases of the engine into the container 3 of the liquid L.

The conveyance duct 2 is further connected to an auxiliary air intake duct 6.

A nebulization chamber 7 is arranged above the tank 3 and communicates with the free surface of the liquid L; the heat of the exhaust gases arriving from the engine is such as to heat the liquid until it boils and the steam generated at the free surface, together with the gases that flow through it, enters the nebulization chamber 7.

Inside the nebulization chamber 7 first screen means are provided being constituted by walls 8 arranged on staggered planes which are substantially perpendicular to the flow of the steam and gases.

The steam and gases strike the walls 8, mixing intimately with each other and forming a dense mist.

A film of condensed liquid forms against the walls 8 and retains the pollutants, flowing back into the tank 3.

The steam and gases are conveyed into a first lower expansion chamber 9a and a second upper expansion chamber 9b, which are connected one another and are arranged in series above the nebulization chamber 7.

The expansion chamber 9a is connected downward of the nebulization chamber 7, while the upper expansion chamber 9b is connected to at least one duct 10 for the outflow of the treated gases and the steam that has not condensed.

Conveniently, the upper expansion chamber 9b is provided with second screen means, constituted by second walls 11, and with a drainage duct 12 which discharges the condensate that forms against the walls 11 into a collection tray 13.

The conveyance duct 2 is provided with a flow control valve 14 which opens when the engine is started, connecting the conveyance duct 2 to the tank 3, and closes when the engine stops, interrupting the connection between the conveyance duct 2 and the tank 3.

In this manner, part of the liquid L and part of the steam are prevented from flowing back towards the engine, causing damage to the cylinders.

In order to reduce engine noise, conventional silencers 15 are provided which are arranged at the auxiliary duct 6.

The lower chamber 9a is provided with plugs 16 for replenishing the liquid L.

Means 17 for collecting the pollutants retained by the liquid L are located on the bottom of the tank 3 and are constituted by a tray which is provided with closure means 18 of the gate-valve type or the like, adapted to prevent the passage of the liquid during the cleaning and/or maintenance of said tray.

The operation of the invention is as follows: when the engine is started, the valve 14 opens the conveyance duct 2 and the fan 4 is turned by the belts 5; in this manner, the exhaust gases of the engine are forced into the liquid L contained in the tank 3.

After an initial transient period, the heat of the exhaust gases flowing through the liquid L is such that the liquid boils.

The steam released from the free surface of the liquid L, together with the gases that flow through it, enters the nebulization chamber 7, where it repeatedly strikes the walls 8; this causes an intimate mixing of the steam and the gases.

The steam retains the pollutants and the condensation that forms on the walls 8 flows back towards collection means 17.

After passing through the expansion chambers 9a and 9b, the residual steam and the treated gases are discharged externally by way of the outflow duct 10.

The collection means 17 are provided with a gate valve 18, which is open during the operation of the device 1 and is closed when it is necessary to remove the impurities that have deposited in the collection means 17.

In practice it has been found that the described invention achieves the intended aim and objects.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for removing pollutants contained in exhaust gases of internal-combustion engines, **characterized in that** it comprises: at least one duct (2) for conveying the exhaust gases to be treated into a tank (3) which contains a liquid (L) for scrubbing the conveyed gases; means (4) for conveying said gases to be treated from said conveyance duct (2) towards said tank (3); a chamber (7) for nebulizing a liquid through which the gases flow, said chamber being connected downward of the free liquid surface of said tank (3); first screen means (8), which are arranged inside said nebulization chamber (7) and are adapted to mix said nebulized liquid and exhaust gases by impact; a first expansion chamber (9a), which is connected downward of the nebulization chamber (7) and upward to at least a second expansion chamber (9b) which is arranged in series downstream of said first expansion chamber (9a) and connected to a outflow duct (10) of the nebulized liquid and of the treated gases, and is provided with second screen means (11) and with a duct (12) for draining the condensed liquid towards a lower collection tray (13); and means (17) for collecting the pollutants retained by the scrubbing liquid, which are located below said tank.

2. The device according to claim 1, **characterized in that** said conveyance means are constituted by a rotating fan (4) which is partially immersed in said tank (3) and is connected to said conveyance duct (2).

3. The device according to one or more of the preceding claims, **characterized in that** said first and second screen means (8, 11) are constituted by walls which are staggered on planes which are substantially perpendicular to the flow of said nebulized liquid and of said gases.

4. The device according to one or more of the preceding claims, **characterized in that** it comprises an auxiliary air intake duct (6) which is connected to said conveyance duct (2) proximate to said conveyance means (4).

5. The device according to one or more of the preceding claims, **characterized in that** it comprises a flow control valve (14) for the exhaust gases to be treated which is located between said tank (3) and said conveyance duct (2) and is adapted to open and close the duct respectively when the engine is running and when it is off.

## Patentansprüche

1. Vorrichtung zum Entfernen von Verunreinigungen, die in Auspuffgasen von Verbrennungsmotoren enthalten sind, **gekennzeichnet durch**
mindestens eine Förderleitung (2) zum Fördern der zu behandelnden Auspuffgase in einen Behälter (3), der eine Flüssigkeit (L) zum Waschen der geförderten Gase enthält;
Mittel (4) zum Fördern der zu behandelnden Gase von der Förderleitung (2) in Richtung auf den Behälter (3);
eine Kammer (7) zum Vernebeln einer Flüssigkeit, **durch** die die Gase strömen, wobei die Kammer hinter der freien Flüssigkeitsoberfläche des Behälters (3) angeschlossen ist;
erste Abschirmmittel (8), die innerhalb der Vernebelungskammer (7) angeordnet sind und zum Mischen der vernebelten Flüssigkeit und der Auspuffgase durch Zusammenprall ausgebildet sind;
eine erste Expansionskammer (9a), die hinter der Vernebelungskammer (7) und vor mindestens einer zweiten Expansionskammer (9b) angeschlossen ist, die in Serie stromabwärts von der ersten Expansionskammer (9a) angeordnet und mit einer Auslassleitung (10) für die vernebelte Flüssigkeit und die behandelten Gase verbunden ist, wobei die erste Expansionskammer zweite Abschirmmittel (11) und eine Leitung (12) zum Ableiten der kondensierten Flüssigkeit in einen niedriger liegenden Sammeltrog (13) aufweist; und
unterhalb dem Behälter angeordnete Mittel (17) zum Sammeln der Verunreinigungen, die in der Waschflüssigkeit zurückgehalten wurden.

2. Vorrichtung nach Anspruch 1, **dadurch gekennzeichnet, dass** die Fördermittel durch einen Rotationslüfter (4) gebildet werden, der in den Behälter (3) teilweise eintaucht und mit der Förderleitung (2) verbunden ist.

3. Vorrichtung nach einem oder mehreren der vorstehenden Ansprüche, **dadurch gekennzeichnet, dass** die ersten und zweiten Abschirmmittel (8, 11) durch Wände gebildet werden, die gestaffelt in Ebenen liegen, die etwa rechtwinklig zur Flussrichtung der vernebelten Flüssigkeit und der Gase angeordnet sind.

4. Vorrichtung nach einem oder mehreren der vorstehenden Ansprüche, **dadurch gekennzeichnet, dass** sie eine Einlassleitung (6) für Hilfsluft aufweist, die mit der Förderleitung (2) in der Nähe der Fördermittel (4) angeordnet ist.

5. Vorrichtung nach einem oder mehreren der vorstehenden Ansprüche, **dadurch gekennzeichnet, dass** sie ein Strömungsregelventil (14) für die zu behandelnden Auspuffgase aufweist, das zwischen dem Behälter (3) und der Förderleitung (2) angeordnet und zum Öffnen und Schließen bei laufendem bzw. stehendem Motor ausgebildet ist.

## Revendications

1. Dispositif pour éliminer des polluants contenus dans des gaz d'échappement de moteurs à combustion interne,
**caractérisé en ce qu'**il comprend : au moins un conduit (2) pour amener les gaz d'échappement à traiter dans un réservoir (3) qui contient un liquide (L) pour épurer les gaz amenés ; des moyens (4) pour amener lesdits gaz à traiter dudit conduit d'amenée (2) audit réservoir (3) ; une chambre (7) pour nébuliser un liquide à travers laquelle les gaz s'écoulent, ladite chambre étant reliée vers le bas à la surface de liquide libre dudit réservoir (3) ; des premiers moyens d'écran (8), qui sont agencés à l'intérieur de ladite chambre de nébulisation (7) et sont conçus pour mélanger par choc ledit liquide nébulisé et lesdits gaz d'échappement ; une première chambre de détente (9a), qui est reliée vers le bas à la chambre de nébulisation (7) et vers le haut à au moins une seconde chambre de détente (9b) qui est agencée en série en aval de ladite première chambre de détente (9a) et reliée à un conduit d'écoulement (10) du liquide nébulisé et des gaz traités, et est munie de seconds moyens d'écran (11) et d'un conduit (12) pour drainer le liquide condensé vers une cuvette de collecte inférieure (13) ; et des moyens (17) pour recueillir les polluants retenus par le liquide d'épuration, qui sont situés en dessous dudit réservoir.

2. Dispositif selon la revendication 1,
**caractérisé en ce que** lesdits moyens d'amenée sont constitués par un ventilateur rotatif (4) qui est partiellement immergé dans ledit réservoir (3) et est relié audit conduit d'amenée (2).

3. Dispositif selon une ou plusieurs des revendications précédentes,
**caractérisé en ce que** lesdits premiers et seconds moyens d'écran (8, 11) sont constitués par des parois qui sont échelonnées dans des plans qui sont sensiblement perpendiculaires à l'écoulement dudit liquide nébulisé et desdits gaz d'échappement.

4. Dispositif selon une ou plusieurs des revendications précédentes,
**caractérisé en ce qu'**il comprend un conduit d'admission d'air auxiliaire (6) qui est relié audit conduit d'amenée (2) à proximité desdits moyens d'amenée (4).

5. Dispositif selon une ou plusieurs des revendications précédentes,
**caractérisé en ce qu'**il comprend une valve de commande d'écoulement (14) pour les gaz d'échappement à traiter, qui est située entre ledit réservoir (3) et ledit conduit d'amenée (2) et est conçue pour ouvrir et fermer le conduit respectivement quand le moteur tourne ou quand il est arrêté.
